(19) Europäisches Patentamt
European Patent Office
Office européen des brevets

(11) **EP 4 772 847 A1**

(12) **EUROPEAN PATENT APPLICATION**
published in accordance with Art. 153(4) EPC

(43) Date of publication:
**08.07.2026 Bulletin 2026/28**

(21) Application number: **24859097.8**

(22) Date of filing: **13.06.2024**

(51) International Patent Classification (IPC):
**G01L 1/00** *(2006.01)* **G01L 25/00** *(2006.01)*

(52) Cooperative Patent Classification (CPC):
**G01L 1/00; G01L 25/00**

(86) International application number:
**PCT/JP2024/021547**

(87) International publication number:
**WO 2025/047051 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.08.2023 JP 2023140448**

(71) Applicant: **FUJIFILM Corporation**
**Tokyo 106-8620 (JP)**

(72) Inventor: **OMOTO, Makoto**
**Tokyo 106-8620 (JP)**

(74) Representative: **Parker, Andrew James**
**Meissner Bolte Partnerschaft mbB**
**Patentanwälte Rechtsanwälte**
**Postfach 86 06 24**
**81633 München (DE)**

(54) **PRESSURE MEASUREMENT METHOD, INFORMATION PROCESSING DEVICE, AND PROGRAM**

(57) A color-developing member image is acquired after the same pressure is applied to a color-developing member that develops color at a density in accordance with the applied pressure and a sensor device that outputs an output value in accordance with the applied pressure. Time-series data of the output value of the sensor device during a pressure application period is acquired. Pressure distribution data indicating a surface distribution of the applied pressure is derived based on the color-developing member image. Pressure distribution time-series data indicating a temporal transition of the surface distribution of the applied pressure is derived based on the time-series data of the output value of the sensor device. A pressure value at each position and each point in time of the pressure distribution time-series data is corrected by using the pressure distribution data. The sensor device is made of a material having a hardness of a pencil hardness of 2H or higher.

FIG. 1

## Description

## BACKGROUND OF THE INVENTION

### 1. Field of the Invention

The technology of the present disclosure relates to a pressure measurement method, an information processing device, and a program.

### 2. Description of the Related Art

In the related art, various technologies of measuring energy (for example, pressure, heat, and ultraviolet rays) applied to a surface are known.

First, a technology for measuring an amount of energy by using a color-developing member that changes color in accordance with an amount of applied energy is known. An example of such a color-developing member includes PRESCALE (registered trademark) (manufactured by FUJIFILM Corporation) with which a color-developing density in accordance with applied pressure is obtained. For example, Patent Document 1 discloses a technology in which a pressure measurement sheet (for example, PRESCALE) is disposed and imaged on a calibration sheet, the density, size, distortion, and shape of a captured image are corrected based on the calibration sheet included in the captured image, and a density value of the pressure measurement sheet included in an image after the correction is converted into a pressure value.

Second, a sensor device that outputs an electric signal in accordance with a pressure or the like by a sensor element that detects the pressure or the like is known. For example, Patent Document 2 discloses a sensor device comprising a sensing unit that is disposed on a substrate and includes a sensor element detecting at least one of pressure or temperature and a storage unit that stores calibration data of the sensor element.

## SUMMARY OF THE INVENTION

An object of the technology of the present disclosure is to measure a temporal transition of a surface distribution of an applied pressure with high accuracy.

The technology of the present disclosure relates to a pressure measurement method executed by at least one processor provided in an information processing device, the pressure measurement method comprising: acquiring a color-developing member image that is a captured image after pressure application of a color-developing member that develops color at a density in accordance with an applied pressure in a case in which the same pressure is applied to the color-developing member and a sensor device that outputs an output value in accordance with the applied pressure; acquiring time-series data of the output value of the sensor device during a pressure application period; and performing a process based on the color-developing member image and the time-series data of the output value of the sensor device, in which the sensor device is made of a material having a hardness of a pencil hardness of 2H or higher.

The process may include a process related to a surface distribution of the applied pressure based on the time-series data of the output value of the sensor device. The process may include a process using pressure distribution data indicating the surface distribution of the applied pressure and derived based on the color-developing member image, and pressure distribution time-series data indicating a temporal transition of the surface distribution of the applied pressure and derived based on the time-series data of the output value of the sensor device. The process may include a process of correcting a pressure value at each position and each point in time of the pressure distribution time-series data by using the pressure distribution data.

In a case of applying the same pressure to the color-developing member and the sensor device, the pressure may be applied in a state in which the color-developing member and the sensor device are superposed. The sensor device may be a pressure-resistance type tactile sensor including a plurality of electrodes arranged on a surface of a substrate and a pressure-sensitive conductive member that covers the plurality of electrodes, and the substrate may be made of a material having a hardness of a pencil hardness of 2H or higher. The sensor device may include a filter that removes noise components included in electric signals read from the plurality of electrodes.

The technology of the present disclosure relates to an information processing device comprising: at least one processor. The processor acquires a color-developing member image that is a captured image after pressure application of a color-developing member that develops color at a density in accordance with an applied pressure in a case in which the same pressure is applied to the color-developing member and a sensor device that outputs an output value in accordance with the applied pressure, acquires time-series data of the output value of the sensor device during a pressure application period, and performs a process based on the color-developing member image and the time-series data of the output value of the sensor device. The sensor device is made of a material having a hardness of a pencil hardness of 2H or higher.

The technology of the present disclosure relates to a program causing at least one processor provided in an information processing device to execute a process comprising: acquiring a color-developing member image that is a captured image after pressure application of a color-developing member that develops color at a density in accordance with an applied pressure in a case in which the same pressure is applied to the color-developing member and a sensor device that outputs an output value in accordance with the applied pressure; acquiring time-series data of the output value of the sensor device during a pressure application period; and performing a process based on the color-developing member image and the time-series data of the output value of the sensor device. The sensor device is made of a material having a hardness of a pencil hardness of 2H or higher.

According to the technology of the present disclosure, it is possible to measure the temporal transition of the surface distribution of the applied pressure with high accuracy.

## BRIEF DESCRIPTION OF THE DRAWINGS

FIG. 1 is a diagram illustrating an example of a pressure measurement method according to an embodiment of the technology of the present disclosure.

FIG. 2A is a plan view illustrating an example of a configuration of a sensor device.

FIG. 2B is a cross-sectional view illustrating an example of the configuration of the sensor device.

FIG. 3 is a diagram illustrating an example of a hardware configuration of an information processing device.

FIG. 4A is a diagram illustrating an example of first reference data.

FIG. 4B is a diagram illustrating an example of second reference data.

FIG. 5 is a functional block diagram illustrating an example of a functional configuration of the information processing device.

FIG. 6 is a flowchart illustrating an example of a flow of a process performed by a CPU executing a pressure measurement program.

FIG. 7 is a diagram illustrating unevenness formed on a surface of the sensor device by applying a pressure.

FIG. 8 is a plan view illustrating an example of a configuration of the sensor device.

## DESCRIPTION OF THE PREFERRED EMBODIMENTS

Hereinafter, an embodiment example of the technology of the present disclosure will be described with reference to the accompanying drawings. The same or equivalent components and portions in the drawings are designated by the same reference numerals, and the duplicated description will be omitted.

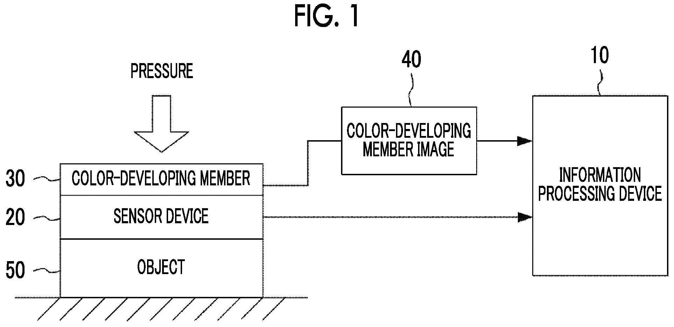

FIG. 1 is a diagram illustrating an example of a pressure measurement method according to the embodiment of the technology of the present disclosure. The pressure measurement method according to the present embodiment measures an applied pressure by using two pressure measurement units, that is, a sensor device 20 and a color-developing member 30.

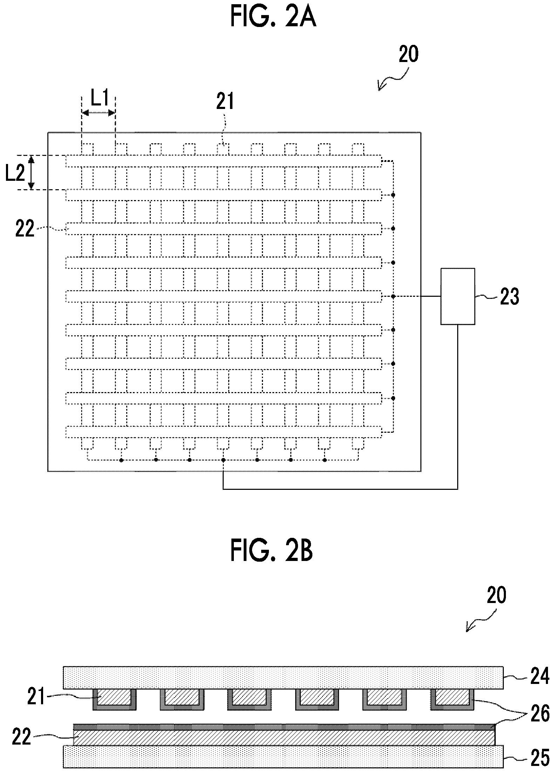

FIG. 2A is a planar perspective view illustrating an example of a configuration of the sensor device 20. FIG. 2B is a cross-sectional view illustrating an example of the configuration of the sensor device 20. The sensor device 20 is a tactile sensor that detects a pressure by a pressure-resistance type. The sensor device 20 comprises a plurality of first electrodes 21 arranged on a surface of a substrate 24 and extending in a first direction, a plurality of second electrodes 22 arranged on a surface of a substrate 25 and extending in a second direction intersecting the first direction, and a connector 23. The substrate 24 and the substrate 25 are bonded to each other such that the first electrode 21 and the second electrode 22 intersect each other. The substrates 24 and 25 are made of a resin, and the first electrodes 21 and the second electrodes 22 are made of, for example, a metal such as Cu or Al. The surface of the first electrode 21 and the surface of the second electrode 22 are covered by a pressure-sensitive conductive member 26. The pressure-sensitive conductive member 26 is a member in which a resistance value changes in accordance with the applied pressure.

An electric signal in accordance with the resistance value at each intersection of the first electrode 21 and the second electrode 22, which are pressure detection points of the sensor device 20, is sequentially read out from each electrode. An output value obtained by converting this electric signal into a digital value is output from the connector 23. The output value of the sensor device 20 is a value proportional to a magnitude of the pressure applied to each intersection position of the first electrode 21 and the second electrode 22. The output value of the sensor device 20 is taken into an information processing device 10 connected to the connector 23.

The pressure measurement accuracy by the sensor device 20 is lower than the pressure measurement accuracy by the color-developing member 30. This is because a deviation occurs in the output value of the sensor device 20 due to plastic deformation of the substrates 24 and 25, which is caused in conjunction with the application of the pressure to the sensor device 20. In addition, in a case in which noise is mixed into the electric signal read out from each electrode of the sensor device 20, an error occurs in the output value of the sensor device 20. Meanwhile, since the output value of the sensor device 20 changes in response to the change in the applied pressure, the output value of the sensor device 20 can be acquired as time-series data. That is, by performing the pressure measurement using the sensor device 20, the temporal transition of the surface distribution of the applied pressure can be monitored.

The color-developing member 30 is a film-shaped member in which a color developer layer in which microcapsules encapsulating a colorless dye are dispersed and a color developer layer having a color developer are stacked. In a case in which the pressure is applied to the color-developing member 30, the microcapsules are broken, the colorless dye is adsorbed to the color developer, and the color developer is colored by a chemical reaction. The colorless dye is encapsulated in a plurality of types of microcapsules having different sizes and intensities. An amount of colorless dye that flows out from the broken microcapsules and is adsorbed to the color developer changes in accordance with the pressure applied to the color-developing member 30. Therefore, the color-developing member 30 develops color at a density in accordance with the applied pressure. By analyzing a color-developing state of the color-developing member 30, the surface distribution of the pressure applied to the color-developing member 30 can be monitored. The amount of colorless dye permeated into the color developer is affected by a pressure application time. Therefore, the color-developing density of the color-developing member 30 corresponds to a time-integrated amount of the applied pressure. As the color-developing member 30, for example, PRESCALE (registered trademark) manufactured by FUJIFILM Corporation can be used.

According to the pressure measurement using the color-developing member 30, the surface distribution of the static pressure can be monitored. However, since the color-developing reaction of the color-developing member 30 is irreversible, the temporal transition of the surface distribution of the pressure cannot be monitored. On the other hand, the pressure measurement accuracy by the color-developing member 30 is higher than the pressure measurement accuracy by the sensor device 20.

As described above, in the pressure measurement using the sensor device 20, there is an advantage that the temporal transition of the surface distribution of the applied pressure can be monitored, but there is a disadvantage that the pressure measurement accuracy is relatively low. In the pressure measurement using the color-developing member 30, there is an advantage that the pressure measurement accuracy is relatively high, but there is a disadvantage that the temporal transition of the surface distribution of the applied pressure cannot be monitored. The pressure measurement method according to the present embodiment realizes high-accuracy measurement of the temporal transition of the surface distribution of the applied pressure by compensating for the disadvantage of one of the sensor device 20 or the color-developing member 30 with the advantage of the other.

As illustrated in FIG. 1, the pressure measurement method according to the present embodiment includes applying the pressure to the color-developing member 30 and the sensor device 20 in a state in which the color-developing member 30 and the sensor device 20 are superposed. In addition to the color-developing member 30 and the sensor device 20, an object 50 to which the pressure is applied may be further superposed and the pressure may be applied. As a result, the pressure actually applied to the object 50 can be measured. The object 50 may be, for example, an industrial product such as a metal plate or a semiconductor wafer, or a material thereof, and the pressure measurement method according to the present embodiment can be applied in a manufacturing step of applying a pressure to the industrial product.

The pressure measurement method according to the present embodiment includes acquiring a color-developing member image 40 that is a captured image of the color-developing member 30 after the pressure application. The color-developing member image 40 is acquired as a color image. The color-developing member 30 can be imaged using a digital camera or a scanner. In a case in which the information processing device 10 comprises a digital camera, the color-developing member 30 may be imaged by the digital camera provided in the information processing device 10.

The information processing device 10 may be a portable terminal device such as a smartphone or a tablet computer, or may be a desktop or laptop personal computer.

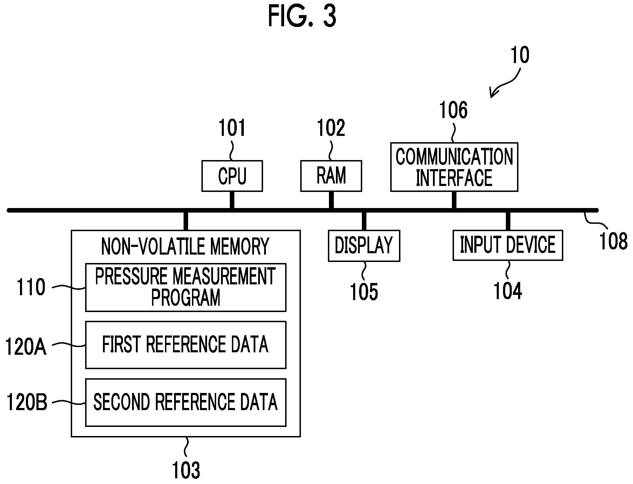

FIG. 3 is a diagram illustrating an example of a hardware configuration of the information processing device 10. The information processing device 10 includes a central processing unit (CPU) 101, a random-access memory (RAM) 102, a non-volatile memory 103, an input device 104 including a keyboard and a mouse, a display 105, and a communication interface 106.

These hardware components are connected to a bus 108.

The display 105 may be a touch panel display. The communication interface 106 is an interface for performing data communication between the information processing device 10 and the digital camera or the scanner that images the sensor device 20 and the color-developing member image 40. The communication method may be either wired or wireless. For the wireless communication, for example, a method compliant with an existing wireless communication standard such as Wi-Fi (registered trademark) and Bluetooth (registered trademark) can be applied.

The non-volatile memory 103 is a non-volatile storage medium, such as a hard disk and a flash memory. The non-volatile memory 103 stores a pressure measurement program 110, first reference data 120A, and second reference data 120B. The RAM 102 is a work memory for the CPU 101 to execute a process. The CPU 101 loads the pressure measurement program 110 stored in the non-volatile memory 103 into the RAM 102 and executes the process in accordance with the pressure measurement program 110. The CPU 101 is an example of a "processor" of the technology of the present disclosure.

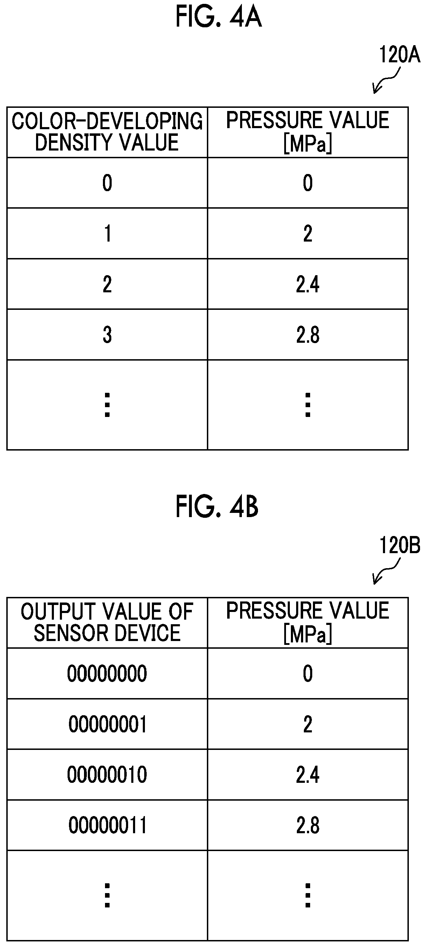

FIG. 4A is a diagram illustrating an example of the first reference data 120A. The first reference data 120A is data in which a color-developing density value in the color-developing member image 40 that is a captured image of the color-developing member 30 after the pressure application and a pressure value are associated with each other. The information processing device 10 refers to the first reference data 120A in a case of deriving the pressure value applied to the color-developing member 30 based on the color-developing member image 40. The first reference data 120A may be provided by a manufacturer that manufactures the color-developing member 30. The first reference data 120A may be created based on, for example, representative characteristics that are representative of color-developing characteristics of the color-developing member 30. The color-developing density value in the first reference data 120A may be a gradation value that expresses the color-developing density in the color-developing member 30 in, for example, 256 gradations in the color-developing member image 40. The number of harmonics can be determined as appropriate.

FIG. 4B is a diagram illustrating an example of the second reference data 120B. The second reference data 120B is data in which the output value of the sensor device 20 and the pressure value are associated with each other. The information processing device 10 refers to the second reference data 120B in a case of deriving the pressure value applied to the sensor device 20 based on the output value of the sensor device 20. The second reference data 120B may be provided by a manufacturer that manufactures the sensor device 20. The output value of the sensor device 20 may be an 8-bit digital value that expresses the pressure detected by the sensor device 20 in, for example, 256 steps.

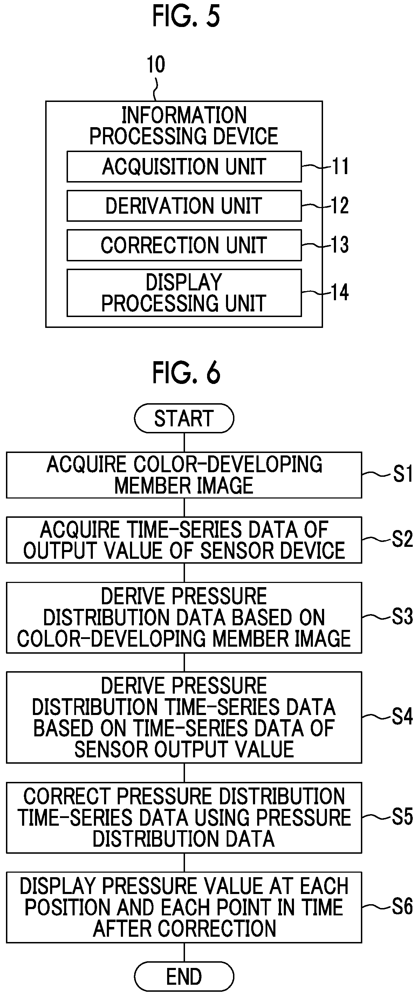

FIG. 5 is a functional block diagram illustrating an example of a functional configuration of the information processing device 10. The information processing device 10 includes an acquisition unit 11, a derivation unit 12, a correction unit 13, and a display processing unit 14. In a case in which the CPU 101 executes the pressure measurement program 110, the CPU 101 functions as the acquisition unit 11, the derivation unit 12, the correction unit 13, and the display processing unit 14.

In the pressure measurement method according to the present embodiment, as illustrated in FIG. 1, the pressure is applied to the color-developing member 30 and the sensor device 20 in a state in which the color-developing member 30 and the sensor device 20 are superposed. After the pressure application is ended, the color-developing member 30 is taken out, and the color-developing surface of the color-developing member 30 is imaged by the digital camera or the scanner (not illustrated).

The acquisition unit 11 acquires the color-developing member image 40 that is a captured image of the color-developing member 30 after the pressure application. Further, the acquisition unit 11 acquires the time-series data of the output value of the sensor device 20 during a pressure application period.

The derivation unit 12 derives pressure distribution data indicating the surface distribution of the applied pressure value by using the color-developing member image 40 and the first reference data 120A acquired by the acquisition unit 11. Specifically, the derivation unit 12 performs a process of specifying the color-developing density value of each pixel of the color-developing member image 40 and deriving the pressure value corresponding to the color-developing density value by referring to the first reference data 120A for each pixel. The derivation unit 12 may derive an index value such as pressure efficiency, a pressurization area, an average pressure, a maximum pressure, a minimum pressure, weight, and pressure uniformity in addition to the pressure value by analyzing the color-developing member image 40. The pressure efficiency is a ratio of an area of a portion included in a recommended pressure range of the color-developing member 30 to a color-developing area of the color-developing member 30. The pressurization area is an area of a color-developing region of the color-developing member 30 (hereinafter, referred to as a color-developing region). The average pressure is an average value of the pressure of the color-developing region. The maximum pressure is a maximum value of the pressure of the color-developing region. The minimum pressure is a minimum value of the pressure of the color-developing region. The weight is a weighted value (pressurization area × average pressure) of the color-developing region. The pressure uniformity is an index of the uniformity of the pressure value of the color-developing region.

In addition, the derivation unit 12 derives pressure distribution time-series data indicating the temporal transition of the surface distribution of the applied pressure by using the time-series data of the output value of the sensor device 20 and the second reference data 120B acquired by the acquisition unit 11. Specifically, the derivation unit 12 performs a process of deriving the pressure value corresponding to the output value of the sensor device 20 at each point in time by referring to the second reference data 120B for each detection point of the sensor device 20.

The correction unit 13 performs a correction process of correcting a pressure value $P_{s(x,y)}(t)$ at each position and each point in time indicated by the pressure distribution time-series data based on the output value of the sensor device 20 by using the pressure distribution data based on the color-developing member image 40. Hereinafter, details of the correction process will be described.

The correction unit 13 derives the time-integrated amount of the pressure value at each detection point indicated by the pressure distribution time-series data. Hereinafter, the time-integrated amount of the pressure value for each detection point will be referred to as an integrated pressure value $P_{a(x,y)}$.

Next, the correction unit 13 derives a correction coefficient $C_{(x,y)}$ at each detection point of the sensor device 20 by dividing the pressure value $P_{c(x,y)}$ at each position indicated by the pressure distribution data based on the color-developing member image 40 by the integrated pressure value $P_{a(x,y)}$ at the same position.

That is, the correction coefficient $C_{(x,y)}$ at each detection point of the sensor device 20 is represented by the following expression (1). The positions of the detection points of the sensor device 20 and the positions of the pixels of the color-developing member image 40 are defined by an x-y Cartesian coordinate system, and the pressure distribution time-series data based on the output value of the sensor device 20 and the pressure distribution data based on the color-developing member image 40 are aligned with each other using the x-y Cartesian coordinate system.

$$C_{(x,y)} = P_{c(x,y)}/P_{a(x,y)} \ ... \ (1)$$

Next, the correction unit 13 performs a process of multiplying the pressure value $P_{s(x,y)}(t)$ at each detection point and each point in time of the pressure distribution time-series data based on the output value of the sensor device 20 by the correction coefficient $C_{(x,y)}$ for each detection point. As a result, the pressure value $P_{s(x,y)}(t)$ at each position and each point in time of the pressure distribution time-series data based on the output value of the sensor device 20 is corrected. That is, the pressure value $P_{(x,y)}(t)$ at each position and each point in time after the correction is represented by the following expression (2).

$$P_{(x,y)}(t) = P_{s(x,y)}(t) \times C_{(x,y)} \ ... \ (2)$$

Here, it is assumed that the surface resolution of the pressure distribution data based on the color-developing member image 40 and the surface resolution of the pressure distribution time-series data based on the sensor device 20 are different from each other. Typically, the surface resolution of the pressure distribution data based on the color-developing member image 40 is higher than the surface resolution of the pressure distribution time-series data based on the sensor device 20. This is because the number of pixels of the color-developing member image 40 is usually larger than the number of pressure detection points of the sensor device 20. Therefore, for example, a process of matching the surface resolution of the pressure distribution data based on the color-developing member image 40 to the surface resolution of the pressure distribution time-series data based on the sensor device 20 may be performed. For example, in a case in which the surface resolution of the pressure distribution data based on the color-developing member image 40 is four times the surface resolution of the pressure distribution time-series data based on the sensor device 20, the resolution conversion of integrating four pixels adjacent to each other in the color-developing member image 40 into one pixel may be performed. In this case, an average value of the pixel values of the four pixels may be applied as a pixel value of one pixel to be integrated, and then the correction coefficient $C_{(x,y)}$ may be derived.

In addition, a process of matching the surface resolution of the pressure distribution time-series data based on the sensor device 20 to the surface resolution of the pressure distribution data based on the color-developing member image 40 may be performed. For example, in a case in which the surface resolution of the pressure distribution data based on the color-developing member image 40 is four times the surface resolution of the pressure distribution time-series data based on the sensor device 20, the resolution conversion of dividing one pressure detection point of the sensor device 20 into four regions may be performed. In this case, the output value at one detection point before the division may be assigned to the four regions, and then the correction coefficient $C_{(x,y)}$ may be derived for each of the four regions.

The display processing unit 14 performs a process of displaying the pressure value $P_{(x,y)}(t)$ at each position and each point in time after the correction on the display 105. The display processing unit 14 may display, for example, the pressure value at each position after the correction by a plurality of three-dimensional graphs for each point in time. Further, the display processing unit 14 displays a three-dimensional graph indicating the pressure value at each position after the correction as a video that changes over time. In addition, the display processing unit 14 may display a two-dimensional graph indicating the temporal transition of the pressure value at the designated position.

FIG. 6 is a flowchart illustrating an example of a flow of a process performed by the CPU 101 executing the pressure measurement program 110. It is assumed that, prior to the execution of the pressure measurement program 110, the pressure is applied to the color-developing member 30 and the sensor device 20 in a state in which the color-developing member 30 and the sensor device 20 are superposed. In addition, it is assumed that the color-developing member image 40 is obtained for the color-developing member 30 after the pressure application.

In step S1, the acquisition unit 11 acquires the color-developing member image 40 that is a captured image of the color-developing member 30 after the pressure application.

In step S2, the acquisition unit 11 acquires the time-series data of the output value of the sensor device 20 during the pressure application period.

In step S3, the derivation unit 12 derives the pressure distribution data indicating the surface distribution of the applied pressure value by using the color-developing member image 40 and the first reference data 120A acquired in step S1. Specifically, the derivation unit 12 performs the process of specifying the color-developing density value of each pixel of the color-developing member image 40 and deriving the pressure value corresponding to the color-developing density value by referring to the first reference data 120A for each pixel.

In step S4, the derivation unit 12 derives the pressure distribution time-series data indicating the temporal transition of the surface distribution of the applied pressure by using the time-series data of the output value of the sensor device 20 and the second reference data 120B acquired in step S2. Specifically, the derivation unit 12 performs the process of deriving the pressure value corresponding to the output value of the sensor device 20 at each point in time by referring to the second reference data 120B for each detection point of the sensor device 20.

In step S5, the correction unit 13 corrects the pressure value $P_{s(x,y)}(t)$ at each position and each point in time indicated by the pressure distribution time-series data derived in step S4 by using the pressure distribution data derived in step S3. The pressure value $P_{(x,y)}(t)$ at each position and each point in time after the correction is represented by the above expression (2).

In step S6, the display processing unit 14 performs the process of displaying the pressure value $P_{(x,y)}(t)$ at each position and each point in time after the correction on the display 105.

As described above, the pressure measurement method according to the embodiment of the technology of the present disclosure, which is executed by the information processing device 100, includes acquiring a color-developing member image 40 that is a captured image after pressure application of a color-developing member 30 that develops color at a density in accordance with an applied pressure in a case in which the pressure is applied to the color-developing member 30 and a sensor device 20 that outputs an output value in accordance with the applied pressure in a state in which the color-developing member 30 and the sensor device 20 are superposed; acquiring time-series data of the output value of the sensor device 20 during a pressure application period; deriving pressure distribution data indicating a surface distribution of the applied pressure based on the color-developing member image 40; deriving pressure distribution time-series data indicating a temporal transition of the surface distribution of the applied pressure based on the time-series data of the output value of the sensor device 20; and correcting a pressure value at each position and each point in time of the pressure distribution time-series data by using the pressure distribution data.

In the pressure measurement using the sensor device 20, there is the advantage that the temporal transition of the surface distribution of the applied pressure can be monitored, but there is the disadvantage that the pressure measurement accuracy is relatively low. In the pressure measurement using the color-developing member 30, there is the advantage that the pressure measurement accuracy is relatively high, but there is the disadvantage that the temporal transition of the surface distribution of the applied pressure cannot be monitored. With the pressure measurement method according to the present embodiment, the temporal transition of the surface distribution of the applied pressure can be measured with high accuracy by compensating for the disadvantage in the pressure measurement using the sensor device 20 and the pressure measurement using the color-developing member 30 with the advantage of the other.

However, in a case in which the pressure measurement accuracy by the sensor device 20 is excessively low, it is difficult to derive the accurate pressure value even by the correction process in accordance with the pressure measurement method according to the present embodiment. One of the factors that reduce the pressure measurement accuracy of the sensor device 20 is the plastic deformation of the substrates 24 and 25 caused by the application of the pressure to the sensor device 20 as described above. In a case in which the plastic deformation occurs in the substrates 24 and 25, a compression state of the pressure-sensitive conductive member 26 with respect to the pressure application changes, so that the output value of the sensor device 20 also changes. For example, in a case in which the substrates 24 and 25 are made of PET having a hardness equivalent to a pencil hardness 1H, the plastic deformation that affects the output value of the sensor device 20 may occur in the substrates 24 and 25 by the pressure application in the assumed measurement pressure range (for example, 0.001 Mpa or more and 1000 MPa or less).

Therefore, in the pressure measurement method according to the embodiment of the technology of the present disclosure, the sensor device 20 made of a material having a hardness such that the plastic deformation that affects the output value does not occur by the pressure application in the assumed measurement pressure range is used. Specifically, the substrates 24 and 25 of the sensor device 20 are made of a material having a hardness of a pencil hardness of 2H or higher. By forming the substrates 24 and 25 of the sensor device 20 from a material having a hardness of a pencil hardness of 2H or higher, the plastic deformation of the substrates 24 and 25 caused by the pressure application to the sensor device 20 can be suppressed, and the change in the output value of the sensor device 20 caused by the deformation of the substrates 24 and 25 can be suppressed. As a result, it is possible to improve the pressure measurement accuracy of the sensor device 20. As the material of the substrates 24 and 25, for example, an epoxy resin (equivalent to a hardness of 2H), polyether ether ketone (PEEK, equivalent to a hardness of 3H), and glass (equivalent to a hardness of 9H) can be used.

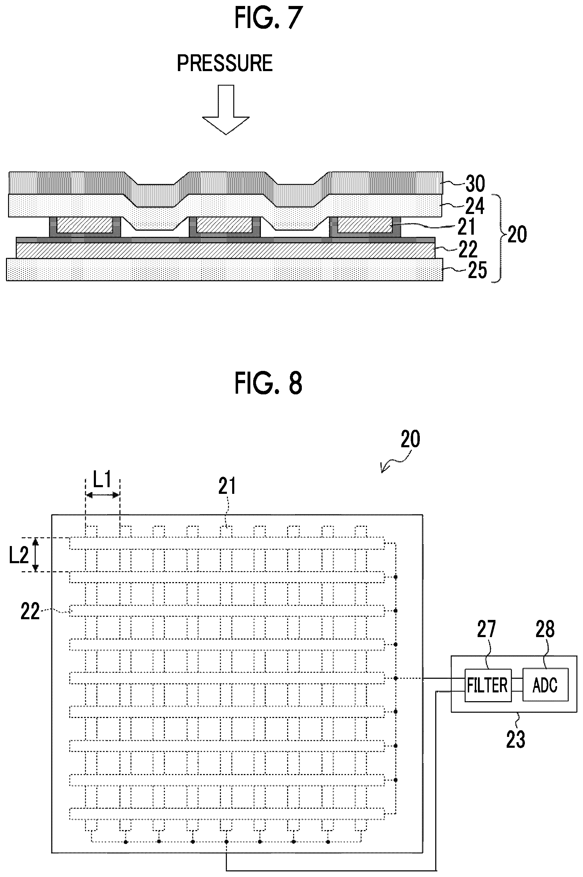

Further, in a case in which the pressure is applied in a state in which the color-developing member 30 and the sensor device 20 are superposed, the following problems may arise. That is, as illustrated in FIG. 2A, the sensor device 20 includes the first electrode 21 and the second electrode 22 that are arranged in a lattice shape. The first electrode 21 and the second electrode 22 are formed on the surfaces of the substrates 24 and 25 by a film-forming method such as printing. In a case in which the thicknesses of the first electrode 21 and the second electrode 22 are large, the unevenness corresponding to the arrangement of the first electrode 21 and the second electrode 22 is formed on the surface (contact surface with the color-developing member 30) of the sensor device 20 by the pressure application as illustrated in FIG. 7, and the color-developing state of the color-developing member 30 is affected. Specifically, in the color-developing member 30, a lattice-shaped color-developing portion corresponding to the arrangement of the first electrode 21 and the second electrode 22 may occur. As described above, in the color-developing member 30, the occurrence of the color-developing portion derived from the structure of the sensor device 20 hinders the high-accuracy pressure measurement.

By forming the substrates 24 and 25 of the sensor device 20 from a material having a hardness of a pencil hardness of 2H or higher, the unevenness formed on the surface (contact surface with the color-developing member 30) of the sensor device 20 by the pressure application can be relaxed or eliminated, and the influence on the color-developing state of the color-developing member 30 can be suppressed.

Another factor that reduces the pressure measurement accuracy of the sensor device 20 is the noise included in the electric signals read from the first electrode 21 and the second electrode 22 of the sensor device 20 as described above. Therefore, in the pressure measurement method according to the present embodiment, the sensor device 20 including a filter that removes the noise components included in the electric signals read from the plurality of electrodes is used. As illustrated in FIG. 8, the sensor device 20 includes a filter 27 that removes the noise components included in the electric signals transmitted on the analog line connected to the first electrode 21 and the second electrode 22. An analog-to-digital converter 28 is provided downstream of the filter 27. The filter 27 and the analog-to-digital converter 28 are mounted on the substrate constituting the connector 23.

In the above description, as an example, a case has been described in which the pressure is applied in a state in which the color-developing member 30 and the sensor device 20 are superposed, but the technology of the present disclosure is not limited to this aspect. That is, in the pressure measurement method according to the technology of the present disclosure, the same pressure may be applied to the color-developing member 30 and the sensor device 20, and the pressure does not need to be applied to the color-developing member 30 and the sensor device 20 at the same time. The same pressure may be sequentially applied to the color-developing member 30 and the sensor device 20. Here, the term "same" also includes a case in which the pressure is regarded as being substantially the same. For example, in a case in which a unit that applies the pressure to the color-developing member 30 and the sensor device 20, such as a press device, outputs the pressure having a magnitude corresponding to the set value, the pressure sequentially applied to the color-developing member 30 and the sensor device 20 can be regarded as being substantially the same in a case in which the set values are the same.

As a hardware structure for achieving various processes executed by each functional unit of the information processing device 10, various processors illustrated below can be used. As described above, in addition to the CPU that is a general-purpose processor that executes software (program) to function as various processing units, the various processors include a programmable logic device (PLD) that is a processor whose circuit configuration can be changed after manufacture, such as a field programmable gate array (FPGA), and a dedicated electric circuit that is a processor having a circuit configuration that is designed for exclusive use in order to execute a specific process, such as an application specific integrated circuit (ASIC).

One processing unit may be configured by one of the various processors or may be configured by a combination of two or more processors of the same type or different types (for example, a combination of a plurality of FPGAs or a combination of a CPU and an FPGA). Further, a plurality of processing units may be configured by one processor.

A first example of the configuration in which the plurality of processing units are configured by one processor is a form in which one processor is configured by a combination of one or more CPUs and software and the processor functions as the plurality of processing units, as represented by the computer, such as a client and a server. A second example thereof is a form in which a processor that implements the function of the entire system including the plurality of processing units by one integrated circuit (IC) chip is used, as represented by a system on a chip (SoC) or the like. In this manner, various processing units are configured by using one or more of the various processors as a hardware structure. Furthermore, as the hardware structure of the various processors, more specifically, an electric circuit (circuitry) in which circuit elements such as semiconductor elements are combined can be used.

Moreover, in the above embodiment, the aspect has been described in which the pressure measurement program 110 is stored (installed) in advance in the non-volatile memory 103, but the technology of the present disclosure is not limited to this. The pressure measurement program 110 may be provided in a state of being recorded on a recording medium, such as a compact disc read only memory (CD-ROM), a digital versatile disc read only memory (DVD-ROM), or a universal serial bus (USB) memory. Further, the pressure measurement program 110 may be downloaded from an external device via a network.

The following supplementary notes are further disclosed with respect to the above embodiment.

(Supplementary Note 1)

A pressure measurement method executed by at least one processor provided in an information processing device, the pressure measurement method comprising: acquiring a color-developing member image that is a captured image after pressure application of a color-developing member that develops color at a density in accordance with an applied pressure in a case in which the same pressure is applied to the color-developing member and a sensor device that outputs an output value in accordance with the applied pressure; acquiring time-series data of the output value of the sensor device during a pressure application period; and performing a process based on the color-developing member image and the time-series data of the output value of the sensor device, in which the sensor device is made of a material having a hardness of a pencil hardness of 2H or higher.

(Supplementary Note 2)

The pressure measurement method according to supplementary note 1, in which the process includes a process related to a surface distribution of the applied pressure based on the time-series data of the output value of the sensor device.

(Supplementary Note 3)

The pressure measurement method according to supplementary note 2, in which the process includes a process using pressure distribution data indicating the surface distribution of the applied pressure and derived based on the color-developing member image, and pressure distribution time-series data indicating a temporal transition of the surface distribution of the applied pressure and derived based on the time-series data of the output value of the sensor device.

(Supplementary Note 4)

The pressure measurement method according to supplementary note 3, in which the process includes a process of correcting a pressure value at each position and each point in time of the pressure distribution time-series data by using the pressure distribution data.

(Supplementary Note 5)

The pressure measurement method according to any one of supplementary notes 1 to 4, in which the pressure is applied in a state in which the color-developing member and the sensor device are superposed.

(Supplementary Note 6)

The pressure measurement method according to any one of supplementary notes 1 to 5, in which the sensor device is a pressure-resistance type tactile sensor including a plurality of electrodes arranged on a surface of a substrate and a pressure-sensitive conductive member that covers the plurality of electrodes, and the substrate is made of a material having a hardness of a pencil hardness of 2H or higher.

(Supplementary Note 7)

The pressure measurement method according to any one of supplementary notes 1 to 6, in which the sensor device includes a filter that removes noise components included in electric signals read from the plurality of electrodes.

(Supplementary Note 8)

An information processing device comprising: at least one processor, in which the processor acquires a color-developing member image that is a captured image after pressure application of a color-developing member that develops color at a density in accordance with an applied pressure in a case in which the same pressure is applied to the color-developing member and a sensor device that outputs an output value in accordance with the applied pressure, acquires time-series data of the output value of the sensor device during a pressure application period, and performs a process based on the color-developing member image and the time-series data of the output value of the sensor device, and the sensor device is made of a material having a hardness of a pencil hardness of 2H or higher.

(Supplementary Note 9)

A program causing at least one processor provided in an information processing device to execute a process comprising: acquiring a color-developing member image that is a captured image after pressure application of a color-developing member that develops color at a density in accordance with an applied pressure in a case in which the same pressure is applied to the color-developing member and a sensor device that outputs an output value in accordance with the applied pressure; acquiring time-series data of the output value of the sensor device during a pressure application period; and performing a process based on the color-developing member image and the time-series data of the output value of the sensor device, in which the sensor device is made of a material having a hardness of a pencil hardness of 2H or higher.

(Supplementary Note 10)

A pressure measurement method executed by at least one processor provided in an information processing device, the pressure measurement method comprising: acquiring a color-developing member image that is a captured image after pressure application of a color-developing member that develops color at a density in accordance with an applied pressure in a case in which the same pressure is applied to the color-developing member and a sensor device that outputs an output value in accordance with the applied pressure; acquiring time-series data of the output value of the sensor device during a pressure application period; deriving pressure distribution data indicating a surface distribution of the applied pressure based on the color-developing member image; deriving pressure distribution time-series data indicating a temporal transition of the surface distribution of the applied pressure based on the time-series data of the output value of the sensor device; and correcting a pressure value at each position and each point in time of the pressure distribution time-series data by using the pressure distribution data, in which the sensor device is made of a material having a hardness of a pencil hardness of 2H or higher.

The disclosure of Japanese Patent Application No. 2023-140448, filed on August 30, 2023 is incorporated in the present specification in its entirety by reference. Further, all of the documents, the patent applications, and the technical standards described in the present specification are incorporated herein by reference to the same extent as in a case in which each of the documents, the patent applications, and the technical standards are specifically and individually described by being incorporated in the present specification by reference.

**Claims**

1.   A pressure measurement method executed by at least one processor provided in an information processing device, the pressure measurement method comprising:

   acquiring a color-developing member image that is a captured image after pressure application of a color-developing member that develops color at a density in accordance with an applied pressure in a case in which the same pressure is applied to the color-developing member and a sensor device that outputs an output value in accordance with the applied pressure; acquiring time-series data of the output value of the sensor device during a pressure application period; and performing a process based on the color-developing member image and the time-series data of the output value of the sensor device, wherein the sensor device is made of a material having a hardness of a pencil hardness of 2H or higher.

2.   The pressure measurement method according to claim 1,

wherein the process includes a process related to a surface distribution of the applied pressure based on the time-series data of the output value of the sensor device.

3.   The pressure measurement method according to claim 2,
wherein the process includes a process using pressure distribution data indicating the surface distribution of the applied pressure and derived based on the color-developing member image, and pressure distribution time-series data indicating a temporal transition of the surface distribution of the applied pressure and derived based on the time-series data of the output value of the sensor device.

4.   The pressure measurement method according to claim 3,
wherein the process includes a process of correcting a pressure value at each position and each point in time of the pressure distribution time-series data by using the pressure distribution data.

5.   The pressure measurement method according to any one of claims 1 to 4,
wherein the pressure is applied in a state in which the color-developing member and the sensor device are superposed.

6.   The pressure measurement method according to any one of claims 1 to 4,

   wherein the sensor device is a pressure-resistance type tactile sensor including a plurality of electrodes arranged on a surface of a substrate and a pressure-sensitive conductive member that covers the plurality of electrodes, and the substrate is made of a material having a hardness of a pencil hardness of 2H or higher.

7.   The pressure measurement method according to claim 6,
wherein the sensor device includes a filter that removes noise components included in electric signals read from the plurality of electrodes.

8.   An information processing device comprising:

   at least one processor,
   wherein the processor

      acquires a color-developing member image that is a captured image after pressure application of a color-developing member that develops color at a density in accordance with an applied pressure in a case in which the same pressure is applied to the color-developing member and a sensor device that outputs an output value in accordance with the applied pressure,
acquires time-series data of the output value of the sensor device during a pressure application period, and
performs a process based on the color-developing member image and the time-series data of the output value of the sensor device, and

the sensor device is made of a material having a hardness of a pencil hardness of 2H or higher.

9. A program causing at least one processor provided in an information processing device to execute a process comprising:

acquiring a color-developing member image that is a captured image after pressure application of a color-developing member that develops color at a density in accordance with an applied pressure in a case in which the same pressure is applied to the color-developing member and a sensor device that outputs an output value in accordance with the applied pressure;
acquiring time-series data of the output value of the sensor device during a pressure application period; and
performing a process based on the color-developing member image and the time-series data of the output value of the sensor device,
wherein the sensor device is made of a material having a hardness of a pencil hardness of 2H or higher.

FIG. 1

## FIG. 2A

## FIG. 2B

FIG. 3

10

101    102    106

CPU    RAM    COMMUNICATION
               INTERFACE

108

NON-VOLATILE MEMORY    DISPLAY    INPUT DEVICE

110    PRESSURE MEASUREMENT    105    104
       PROGRAM

120A    FIRST REFERENCE DATA

120B    SECOND REFERENCE DATA

103

## FIG. 4A

120A

| COLOR-DEVELOPING DENSITY VALUE | PRESSURE VALUE [MPa] |
|---|---|
| 0 | 0 |
| 1 | 2 |
| 2 | 2.4 |
| 3 | 2.8 |
| ⋮ | ⋮ |

## FIG. 4B

120B

| OUTPUT VALUE OF SENSOR DEVICE | PRESSURE VALUE [MPa] |
|---|---|
| 00000000 | 0 |
| 00000001 | 2 |
| 00000010 | 2.4 |
| 00000011 | 2.8 |
| ⋮ | ⋮ |

# FIG. 5

10

```
┌─────────────────────────────────┐
│       INFORMATION               │
│   PROCESSING DEVICE             │
│  ┌───────────────────────────┐  │
│  │    ACQUISITION UNIT       │──┼─11
│  └───────────────────────────┘  │
│  ┌───────────────────────────┐  │
│  │    DERIVATION UNIT        │──┼─12
│  └───────────────────────────┘  │
│  ┌───────────────────────────┐  │
│  │    CORRECTION UNIT        │──┼─13
│  └───────────────────────────┘  │
│  ┌───────────────────────────┐  │
│  │       DISPLAY             │──┼─14
│  │   PROCESSING UNIT         │  │
│  └───────────────────────────┘  │
└─────────────────────────────────┘
```

# FIG. 6

START

ACQUIRE COLOR-DEVELOPING MEMBER IMAGE — S1

ACQUIRE TIME-SERIES DATA OF OUTPUT VALUE OF SENSOR DEVICE — S2

DERIVE PRESSURE DISTRIBUTION DATA BASED ON COLOR-DEVELOPING MEMBER IMAGE — S3

DERIVE PRESSURE DISTRIBUTION TIME-SERIES DATA BASED ON TIME-SERIES DATA OF SENSOR OUTPUT VALUE — S4

CORRECT PRESSURE DISTRIBUTION TIME-SERIES DATA USING PRESSURE DISTRIBUTION DATA — S5

DISPLAY PRESSURE VALUE AT EACH POSITION AND EACH POINT IN TIME AFTER CORRECTION — S6

END

## FIG. 7

## FIG. 8

## INTERNATIONAL SEARCH REPORT

| | International application No. |
|---|---|
| | **PCT/JP2024/021547** |

**A. CLASSIFICATION OF SUBJECT MATTER**

***G01L 1/00***(2006.01)i; ***G01L 25/00***(2006.01)i
FI:  G01L1/00 E; G01L25/00 B

According to International Patent Classification (IPC) or to both national classification and IPC

**B. FIELDS SEARCHED**

Minimum documentation searched (classification system followed by classification symbols)

G01L1/00; G01L5/00; G01L25/00; G06F3/041

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2019-106527 A (SAMSUNG DISPLAY CO., LTD.) 27 June 2019 (2019-06-27) paragraphs [0033]-[0101], fig. 1-5 | 1-5, 8-9 |
| Y | WO 2016/148118 A1 (SOKEN KAGAKU KK) 22 September 2016 (2016-09-22) paragraphs [0023]-[0072], fig. 1-2 | 1-5, 8-9 |
| Y | US 2017/0224764 A1 (CORNELL UNIVERSITY) 10 August 2017 (2017-08-10) paragraphs [0339]-[0344], fig. 9-10 | 2-4 |
| A | JP 2020-112783 A (PANASONIC INTELLECTUAL PROPERTY MANAGEMENT CO., LTD.) 27 July 2020 (2020-07-27) paragraphs [0009]-[0117], fig. 1-17 | 1-9 |
| A | JP 2019-195885 A (SEIKO EPSON CORPORATION) 14 November 2019 (2019-11-14) paragraphs [0093]-[0113], fig. 13-18 | 1-9 |
| A | JP 2017-76251 A (DAI NIPPON PRINTING CO., LTD.) 20 April 2017 (2017-04-20) paragraphs [0016]-[0054], fig. 1-6 | 1-9 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **01 July 2024** | **16 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/021547**

| Patent document cited in search report | | | Publication date (day/month/year) | Patent family member(s) | | | Publication date (day/month/year) |
|---|---|---|---|---|---|---|---|
| JP | 2019-106527 | A | 27 June 2019 | (Family: none) | | | |
| WO | 2016/148118 | A1 | 22 September 2016 | CN | 107405824 | A | |
| | | | | KR | 10-2017-0126862 | A | |
| | | | | TW | 201641294 | A | |
| US | 2017/0224764 | A1 | 10 August 2017 | (Family: none) | | | |
| JP | 2020-112783 | A | 27 July 2020 | (Family: none) | | | |
| JP | 2019-195885 | A | 14 November 2019 | (Family: none) | | | |
| JP | 2017-76251 | A | 20 April 2017 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023140448 A